(19) **Europäisches Patentamt European Patent Office Office européen des brevets**

(11) **EP 1 609 110 B1**

(12) **FASCICULE DE BREVET EUROPEEN**

(45) Date de publication et mention
de la délivrance du brevet:
**21.05.2008 Bulletin 2008/21**

(51) Int Cl.:
***G06K 7/08*** (2006.01)

(21) Numéro de dépôt: **04742422.1**

(86) Numéro de dépôt international:
**PCT/FR2004/000824**

(22) Date de dépôt: **01.04.2004**

(87) Numéro de publication internationale:
**WO 2004/090793 (21.10.2004 Gazette 2004/43)**

(54) **SYSTEME DE LECTURE SANS CONTACT DE CARTES A PUCE APPOSSES SUR DES OBJETS**

SYSTEM ZUM BERÜHRUNGSLOSEN LESEN VON AUF GEGENSTÄNDEN AUFGEBRACHTEN CHIPKARTEN

CONTACTLESS READING SYSTEM FOR CHIP CARDS PLACED ON OBJECTS

(84) Etats contractants désignés:
**AT BE BG CH CY CZ DE DK EE ES FI FR GB GR HU IE IT LI LU MC NL PL PT RO SE SI SK TR**

(30) Priorité: **02.04.2003 FR 0304092**

(43) Date de publication de la demande:
**28.12.2005 Bulletin 2005/52**

(73) Titulaire: **ASK S.A.**
**06906 Sophia Antipolis Cédex (FR)**

(72) Inventeurs:
• **PANGAUD, Nicolas**
**06560 Valbonne (FR)**
• **SABBAH, Elias**
**F-06560 Valbonne (FR)**

(56) Documents cités:
**EP-A- 0 766 200**

• **PATENT ABSTRACTS OF JAPAN vol. 2003, no. 07, 3 juillet 2003 (2003-07-03) & JP 2003 069336 A (FUJITSU LTD), 7 mars 2003 (2003-03-07)**
• **PATENT ABSTRACTS OF JAPAN vol. 2000, no. 02, 29 février 2000 (2000-02-29) & JP 11 313017 A (NIPPON STEEL CORP), 9 novembre 1999 (1999-11-09)**

**Description**

Domaine technique

La présente invention concerne les systèmes utilisant des cartes à puce sans contact et un lecteur fournissant par couplage électromagnétique l'énergie nécessaire aux cartes pour que les informations contenues dans la puce d'une carte à puce puissent être lues par le lecteur et concerne plus particulièrement un système de lecture sans contact de cartes à puce apposées sur des objets.

Etat de la technique

Les systèmes d'émission et de réception sans contact sont largement utilisés de nos jours dans de nombreuses applications. Une de ces applications est la carte à puce sans contact qui est un système de plus en plus utilisé dans différents secteurs, comme par exemple le secteur des transports publics. Elles ont aussi été développées comme moyen de paiement.

L'échange d'informations entre une carte sans contact et le lecteur associé s'effectue par couplage électromagnétique à distance entre une antenne logée dans la carte sans contact et une deuxième antenne située dans le lecteur. Pour élaborer, stocker et traiter les informations, la carte est munie d'une puce comportant une zone mémoire et un microprocesseur, qui est reliée à l'antenne.

Une autre application des cartes à puce sans contact qui prend de plus en plus d'importance est leur utilisation pour l'identification d'objets destinés à la vente ou au prêt tels que des livres, des disques (CD ROM ou DVD). Dans cette application, la puce de la carte apposée sur chaque objet contient en mémoire les données d'identification de l'objet qui permettent ainsi de répertorier l'objet et de l'identifier au moment où il est mis à la disposition d'un acheteur (dans le cas d'une vente) ou d'un abonné (dans le cas d'un prêt).

Il existe sur le marché des systèmes de lecture d'étiquettes apposées sur la page de couverture des livres placés sur les étagères d'une bibliothèque. Dans ce système, le lecteur portable comporte une antenne de lecture placée sur un support plan.

Un lecteur avec une telle configuration d'antenne est décrit dans le document FR-A-2 808 127.

Durant la lecture, le support plan est maintenu parallèle à l'étiquette à lire pour que le champ électromagnétique fourni par l'antenne du lecteur puisse se refermer perpendiculairement au plan de l'étiquette. C'est donc les lignes de champ du bord de l'antenne qui sont principalement utilisées et ceci impose de maintenir le bord de l'antenne à proximité immédiate de la reliure des livres, c'est à dire à une distance d'environ 1cm. Dans la mesure où les reliures ne sont pas forcément alignées, certains livres en retrait vont se trouver ainsi trop éloignés et ne seront pas détectés lors du passage du lecteur devant les livres. Il faut donc faire en sorte de garder l'antenne plaquée contre les reliures des livres à identifier quelle que soit la position de cette reliure sur l'étagère, ce qui limite l'efficacité du lecteur ainsi que la vitesse d'exécution.

Exposé de l'invention

C'est pourquoi le but principal de l'invention est de fournir un système de lecture d'objets placés sur des étagères et disposant de cartes sans contact pour leur identification dans lequel l'antenne du lecteur portable utilisé pour l'identification des objets est maintenue perpendiculairement au plan des cartes sans contact et sans être en contact ou en quasi-contact avec les objets pendant la lecture.

L'objet de l'invention est donc un système de lecture selon la revendication 1.

Description brève des figures

Les buts, objets et caractéristiques de l'invention apparaîtront plus clairement à la lecture de la description qui suit faite en référence aux dessins dans lesquels :

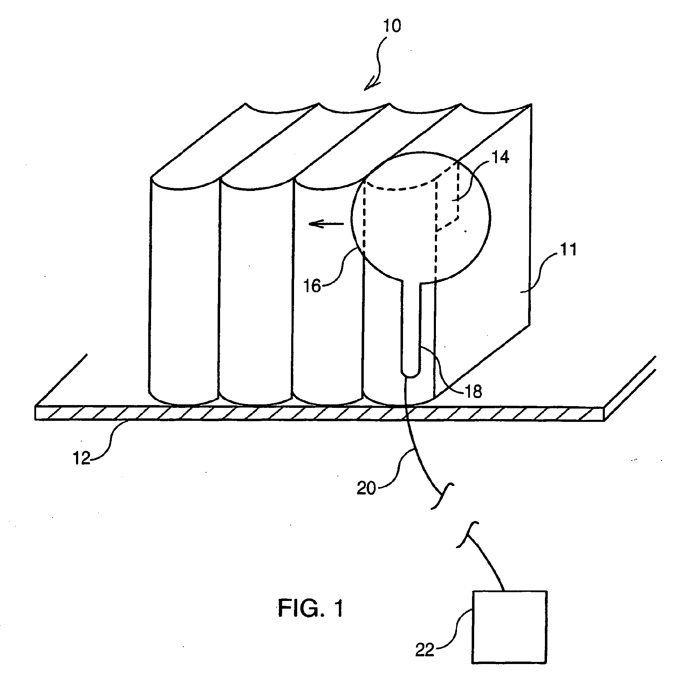

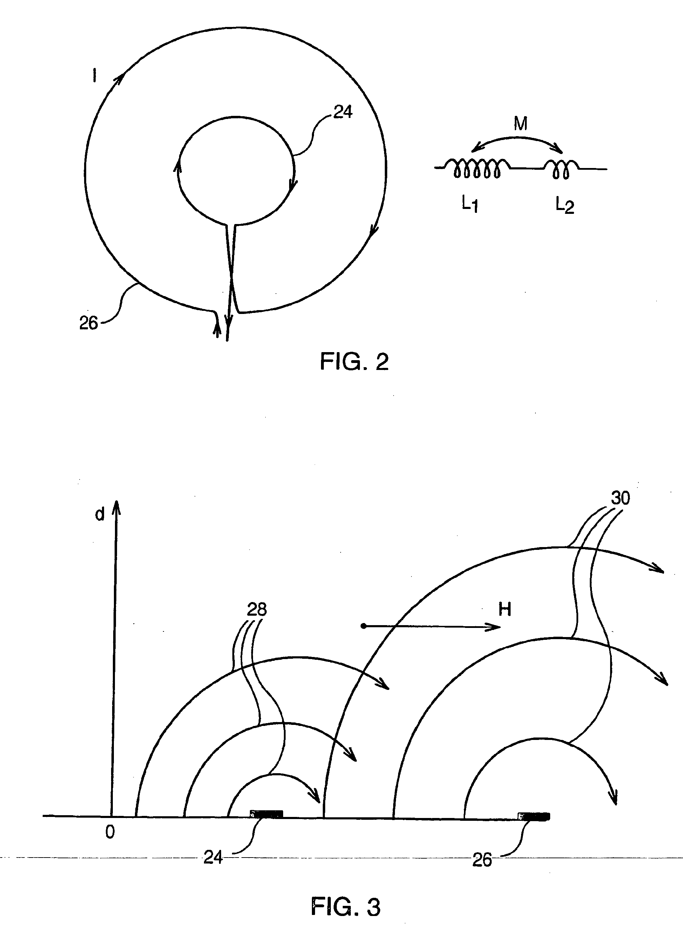

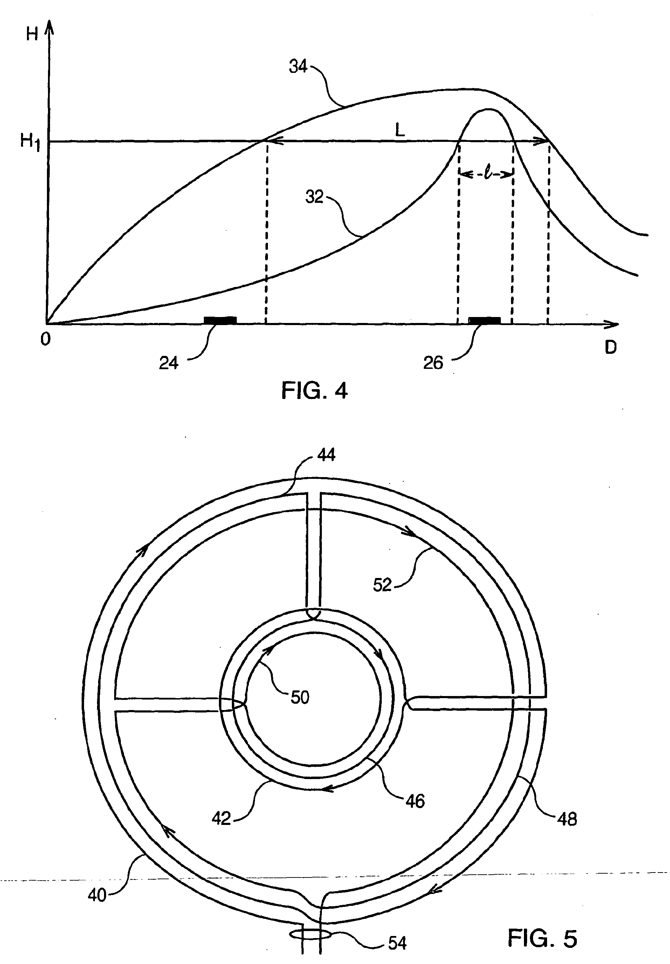

● la figure 1 représente le système de lecture selon l'invention montrant le lecteur devant une étagère de bibliothèque sur laquelle sont placés des livres disposant chacun d'une carte sans contact,
● la figure 2 représente une antenne d'un lecteur composée d'une petite spire et d'une grande spire en série,
● la figure 3 est un diagramme représentant les lignes du champ électromagnétique émis par le lecteur,
● la figure 4 est un diagramme représentant la valeur du champ électromagnétique émis d'une part par un lecteur classique et d'autre part avec le lecteur et
● la figure 5 est une représentation d'un mode de réalisation préféré du lecteur utilisé dans le système selon l'invention.

Description détaillée de l'invention

Le système décrit ci-après est utilisé dans une application préférée de l'invention pour l'identification des livres d'une bibliothèque ou d'une librairie, soit au cours d'une recherche d'un livre particulier, soit au cours d'un inventaire. Dans cette application, illustrée sur la figure 1, les livres 10 sont rangés côte à côte sur une étagère 12. Chaque livre, tel que le livre 11, comporte une carte sans contact 14 apposée sur la page de couverture recto du livre à une position prédéfinie. A noter que la carte pourrait être apposée sur la page de couverture verso. Cette carte sans contact est une carte à puce disposant de son antenne pour l'échange des données avec un lecteur. La puce contient l'identification du livre sur lequel elle est apposée mais peut contenir également des informations sur le contenu du livre ou l'identification des personnes qui ont emprunté le livre s'il s'agit d'une bibliothèque.

Le lecteur utilisé pour la lecture des cartes sans contact est un lecteur dont le support d'antenne 16, circulaire dans le mode de réalisation préféré, est parallèle au dos des livres, c'est à dire en fait perpendiculaire au plan des couvertures où sont apposées les cartes sans contact qui est ici un plan vertical. Le lecteur comporte également un manche 18 tenu dans la main de l'opérateur lorsque le lecteur est déplacé parallèlement à la reliure des livres. Un câble 20 relie le lecteur à une unité de traitement 22 pour recueillir les données transmises par la carte 14. A noter que cette communication pourrait se faire sans fil au moyen d'un émetteur placé dans le manche 18 et un récepteur à l'entrée de l'unité de traitement 22.

Un mode de réalisation d'un exemple d'antenne de lecteur est illustré sur la figure 2. Une telle antenne comprend une petite spire 24 en série avec une grande spire 26, les deux spires étant enroulées dans le même sens comme l'illustrent les flèches sur la figure. Si $L_1$ est l'inductance de la grande spire, $L_2$ l'inductance de la petite spire et M l'inductance mutuelle entre les deux spires, l'inductance totale est donc :

$$L = L_1 + L_2 + M$$

A noter que les deux spires 24 et 26 pourraient être indépendantes ou en parallèle du moment qu'elle sont enroulées dans le même sens. Mais dans ce cas, l'inductance résultante ne serait plus la somme des deux inductances et serait inférieure à la plus petite des deux inductances. A supposer que l'on soit très proche de la résonance, il faudrait faire circuler un courant beaucoup plus important pour obtenir les mêmes valeurs de champ électromagnétique et donc une dépense d'énergie plus importante pour obtenir un résultat similaire.

Les lignes du champ électromagnétique produit par les deux spires en série entre les spires sont la résultante des lignes de champ produits par chacune des spires et sont illustrées sur la figure 3. La spire de plus petit diamètre 24 produit des lignes de champ 28 et la spire de grand diamètre 26 produit des lignes de champ 30 qui sont plus importantes que les lignes de champ 28 à la même distance d (ordonnée) du support d'antenne représenté par l'axe des abscisses. Du fait que le sens d'enroulement est le même pour les deux spires, les lignes de champ 28 et 30 sont également dans le même sens, par exemple le sens des aiguilles d'une montre. En conséquence, en tout point il existe un champ électromagnétique H dont la composante H parallèle au plan du support d'antenne a une valeur qui est la somme des composantes de même sens dues aux deux spires et donc plus importante que chacune des deux composantes.

tes. A noter que, en ce qui concerne la composante perpendiculaire au support d'antenne, elle est faible entre les spires dans la mesure où les deux composantes perpendiculaires au support d'antenne dues aux deux spires se retranchent.

La figure 4 représente la valeur de la composante radiale H parallèle au support d'antenne en fonction de la distance D au centre O commun aux deux spires. Pour comparaison la courbe 32 représente la valeur de la composante H dans le cas où il n'y a pas de petite spire mais seulement une grande spire. La valeur est d'autant plus élevée que l'on mesure cette valeur le plus près possible de la spire. Il y a donc un maximum de la courbe juste au-dessus de la spire puisqu'à cet endroit, les lignes de champ sont horizontales (lignes 30 sur la figure 3).

L'autre courbe 34 est la valeur de la composante radiale H parallèle au support d'antenne lorsque l'antenne a la structure illustrée sur la figure 2, c'est à dire une petite spire 24 en série avec une grande spire 26. Dans ce cas, les valeurs des composantes H dues respectivement au champ émis par la petite et la grande spire s'additionnent comme mentionné précédemment, ce qui résulte en une courbe 34 qui croît rapidement à partir du centre des spires.

Un paramètre important pour obtenir une lecture efficace est que la valeur de la composante H doit avoir une valeur égale ou supérieure à une valeur de seuil $H_1$, cette dernière valeur déterminant la distance minimale à respecter entre le lecteur et la carte à puce. En supposant que cette distance soit de 5cm, soit une distance confortable pour effectuer la lecture, la valeur du seuil $H_1$ correspond à la droite horizontale représentée sur la figure 4. Comme on peut le constater, la valeur $H_1$ est respectée sur un intervalle L important qui s'étend de part et d'autre de la grande spire 26. Au contraire, en l'absence de la petite spire, la valeur $H_1$ ne sera atteinte que sur un intervalle 1 qui ne permettra pas une efficacité de lecture suffisante.

Bien que les spires pourraient avoir une forme rectangulaire (tout en étant concentriques) pour la mise en oeuvre de l'invention, il s'avère que la forme circulaire est celle qui convient le mieux. En effet, pour obtenir une bonne efficacité de lecture avec des spires rectangulaires, l'opérateur doit maintenir le manche du lecteur dans une position parallèle à la carte à puce. Par contre, avec des spires de forme circulaire et donc présentant une symétrie radiale, il est évident que la position du manche du lecteur n'a que peu d'importance sur la lecture, car même si le manche n'est pas parallèle à la carte, les spires circulaires produisent toujours les mêmes lignes de champ électromagnétique.

De façon à obtenir la meilleure efficacité possible, il est important que le rapport entre le diamètre de la grande spire et le diamètre de la petite spire soit compris entre un minimum de 2 et un maximum de 3. Ce rapport permet d'obtenir un compromis entre l'étendue de la zone de fonctionnement (L sur la figure 4) et la portée de l'antenne. Ainsi, plus ce rapport se rapproche de 2, plus la zone de fonctionnement est réduit, mais plus la portée est grande. Inversement, plus le rapport se rapproche de 3, plus la zone de fonctionnement est importante mais plus la portée est faible.

Dans un exemple de réalisation, l'antenne du lecteur est constituée de plusieurs antennes simples (une grande spire en série avec une petite spire) comme illustré sur la figure 2. Ainsi, on peut constituer l'antenne du lecteur selon l'invention de la manière illustrée sur la figure 5. Dans ce mode de réalisation, le fil d'antenne 40 est enroulé dans le sens des aiguilles d'une montre sur ¾ de tour et est suivi d'une spire de petit diamètre 42. Cette petite spire est suivie d'un enroulement de grand diamètre sur ¾ de tour suivi d'une petite spire 46. Celle-ci est suivie d'un enroulement de grand diamètre 48 sur ¾ de tour en série avec une petite spire 50. Enfin, cette dernière est suivie d'un enroulement de grand diamètre 52 sur ¾ de tour revenant au point de départ du premier enroulement c'est à dire l'alimentation 54. D'un point de vue de l'alimentation 54, la géométrie de ce mode de réalisation permet d'obtenir une charge inductive quasi-symétrique pour un fonctionnement homogène. La mise en série de 3 antennes simples illustrées sur la figure 2 permet, dans ce mode de réalisation particulier, d'obtenir une valeur d'inductance permettant d'accorder facilement l'antenne à la fréquence de fonctionnement du système sans contact. Il serait difficile, voire impossible, d'accorder l'antenne à la fréquence de fonctionnement si la valeur de l'inductance était trop importante. En outre, la géométrie de réalisation permet d'obtenir un bon compromis entre une valeur suffisamment élevée du champ électromagnétique et une dimension raisonnable du lecteur.

Comme on l'a déjà mentionné, le système selon l'invention est intéressant pour l'identification de livres dans une librairie ou une bibliothèque. Par exemple, dans une bibliothèque, le lecteur permet une bonne ergonomie et une facilité d'utilisation pour rechercher un titre ou un volume à partir d'une référence connue. Pour ce faire, on peut prévoir qu'une sonnerie retentit dès que le bon livre est détecté. On peut aussi vérifier le bon rangement des livres, par exemple en vérifiant l'ordonnancement des livres en fonction d'un numéro de série croissant. On peut également vérifier des données associées à un livre sans le sortir de son rayonnage. A noter que le même type d'utilisation peut être réalisé pour des disques (CD ROM ou DVD).

Un tel système autorise toutes les applications où les produits sont référencés en entrée du magasin ou du local où ils sont entreposés et inventoriés en rayon à chaque fin de journée et détectés en sortie au niveau de la caisse lors de l'achat. En effet, bien que le lecteur selon l'invention est particulièrement bien adapté pour des cartes à puce toutes parallèles à un plan perpendiculaire au plan de l'antenne du lecteur, ce dernier peut être utilisé même si la carte à puce n'est pas perpendiculaire au plan de l'antenne. De par sa conception, le lecteur peut se faufiler entre les objets à identifier quels qu'ils soient, en particulier entre les vêtements dans un magasin de vêtements.

**Revendications**

1. Système de lecture sans contact comprenant des cartes à puce sans contact (14), chaque carte à puce étant apposée sur la couverture d'un livre (11) placé verticalement sur une étagère dans le but d'identifier cc livre grâce à des données d'identification contenues dans la puce de la carte, et un lecteur mobile (16) tenu à la main par un opérateur disposant principalement d'une antenne de lecteur pour lire lesdites données d'identification;
ledit système étant **caractérisé en ce que** l'antenne de lecteur est fixée sur un support d'antenne plan placé perpendiculairement à la couverture du livre sur laquelle est apposée la carte à puce, et **en ce que** ladite antenne de lecteur est composée d'un fil d'antenne enroulé dans le sens des aiguilles d'une montre sur 3/4 de tour et suivi d'une spire de petit diamètre, cette petite spire étant suivie d'un enroulement de grand diamètre sur 3/4 de tour suivi d'une petite spire, celle-ci étant suivie d'un enroulement de grand diamètre sur 3/4 de tour en série avec une petite spire, cette dernière étant suivie d'un enroulement de grand diamètre sur 3/4 de tour revenant au point de départ du premier enroulement, le rapport entre le diamètre de la spire circulaire de grande dimension et le diamètre de la spire circulaire de petite dimension étant compris entre 2 et 3, lesdites spires étant concentriques et ayant le même sens d'enroulement, de manière à obtenir une valeur maximale de la composante (H) du champ électromagnétique produit par l'antenne parallèle audit support d'antenne de sorte que la réception par une carte à puce des signaux électromagnétiques émis par ladite antenne de lecteur est maximale.

2. système de lecture sans contact selon la revendication 1, dans lequel le lecteur comporte également un manche (18) tenu dans la main de l'opérateur lorsque le lecteur est déplacé parallèlement à la reliure des livres.

3. Système de lecture sans contact selon la revendication 2, dans lequel le lecteur est relié à une unité de traitement (22) pour recueillir les données transmises par la carte soit par un câble (20), soit sans fil au moyen d'un émetteur placé dans le manche (18) et un récepteur à l'entrée de l'unité de traitement.

## Claims

**1.** A contactless reading system featuring contactless smart cards (14), each smart card being affixed onto the cover of a book (11) placed vertically on a shelf with the aim of identifying this book by means of identification data contained in the chip of the card, and a mobile reader (16), held in the hand of an operator, equipped mainly with a reader antenna to read said identification data;

said system being **characterized in that** the reader antenna is fixed on a flat antenna support arranged perpendicularly to the book cover on which the smart card is affixed, and said reader antenna is made up of an antenna wire that is wound clockwise over 3/4 of a turn and is followed by a turn of smaller diameter, this small turn being followed by a winding of a larger diameter over 3/4 of a turn in series with a small turn, the latter being followed by a winding of a larger diameter over 3/4 of a turn returning to the starting point of the first winding, the ratio between the diameter of the circular turn of large dimension and the diameter of the circular turn of small dimension being between 2 and 3, said turns being concentric and having the same direction of winding, so as to obtain a maximum value for the component (H) of the electromagnetic field produced by the antenna which is parallel to said antenna support so that the reception by a smart card of the electronic signals transmitted by said reader antenna is maximum.

**2.** A contactless reading system according to Claim 1, wherein the reader also features a handle (16) held in the operator's hand when the reader is moved parallel to the binding of books.

**3.** A contactless reading system according to Claim 2, wherein the reader is connected to a processing unit (22) to collect the data transmitted by the card either via a cable (20) or wirelessly by means of a transmitter placed in the handle (18) and a receiver at the input of the processing unit.

## Patentansprüche

**1.** System zum berührungslosen Lesen mit kontaktlosen Chipkarten (14), wobei jede Chipkarte auf der Hülle eines Buches (11) angebracht ist, das senkrecht in einem Regal angeordnet ist, um dieses Buch mit Hilfe von Identifizierungsdaten zu identifizieren, die in dem Chip der Karte enthalten sind, und mit einem von einer Bedienungsperson in der Hand gehaltenen beweglichen Lesegerät (16), das hauptsächlich über eine Lesegerätantenne verfügt, um die Identifizierungsdaten zu lesen;

wobei das System **dadurch gekennzeichnet ist, dass** die Lesegerätantenne an einem ebenen Antennenträger befestigt ist, der lotrecht zu der Hülle des Buchs angeordnet ist, auf der die Chipkarte angebracht ist, und dass die Lesegerätantenne aus einem Antennendraht besteht, der in Uhrzeigerrichtung über eine 3/4-Drehung aufgewickelt ist und auf den eine Windung mit kleinem Durchmesser folgt, wobei auf diese kleine Windung eine Wicklung mit großem Durchmesser über eine 3/4-Drehung gefolgt von einer kleinen Windung folgt, wobei auf diese eine Wicklung mit großem Durchmesser über eine 3/4-Drehung in Reihe mit einer kleinen Windung folgt, wobei auf diese letztere eine Wicklung mit großem Durchmesser über eine 3/4-Drehung folgt, die zum Ausgangspunkt der ersten Wicklung zurück kommt, wobei das Verhältnis zwischen dem Durchmesser der kreisförmigen Windung mit großer Abmessung und dem Durchmesser der kreisförmigen Windung mit kleiner Abmessung zwischen 2 und 3 liegt, wobei die Windungen konzentrisch sind und die gleiche Wickelrichtung haben, um einen maximalen Wert der Komponente (H) des elektromagnetischen Felds zu erhalten, das von der Antenne parallel zum Antennenträger erzeugt wird, damit der Empfang der von der Lesegerätantenne gesendeten elektromagnetischen Signale durch eine Chipkarte maximal ist.

**2.** System zum berührungslosen Lesen nach Anspruch 1, bei dem das Lesegerät ebenfalls einen Stiel (18) aufweist, der in der Hand der Bedienungsperson gehalten wird, wenn das Lesegerät parallel zum Einband der Bücher verschoben wird.

**3.** System zum berührungslosen Lesen nach Anspruch 2, bei dem das Lesegerät mit einer Verarbeitungseinheit (22) verbunden ist, um die von der Karte übertragenen Daten entweder über ein Kabel (20) oder drahtlos mittels eines in dem Stiel (18) angeordneten Senders und eines Empfängers am Eingang der Verarbeitungseinheit aufzunehmen.

FIG. 1

FIG. 2

FIG. 3

FIG. 4

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2808127 A